# EUROPEAN PATENT APPLICATION

(11) **EP 1 961 937 A2**
(43) Date of publication of application: **27.08.2008**
(21) Application number: 08101717.0
(22) Date of filing: 18.02.2008
(51) Int. Cl.: F02C 7/143, F02C 3/30

(54) **Wet compression system for a gas turbine engine**

(30) Priority: 22.02.2007 US 677863
(71) Applicant: General Electric Company, Schenectady, NY 12345 (US)
(72) Inventor: Erickson, Dean Matthew, Simpsonville, SC 29681 (US); Schott, Carl Gerard, Simpsonville, SC 29681 (US); Porter, Lane, Simpsonville, SC 29681 (US); Hu, Iris, Greer, SC 29651 (US); Kight, Matthew, Greenville, SC 29615 (US)
(74) Representative: Illingworth-Law, William Illingworth

(57) **Abstract**

A wet compression system (50) for a gas turbine compressor having a bellmouth (24) that includes a plurality of nozzles (40) for spraying a fine spray of liquid disposed within an aft section of the bellmouth. The aft section of the bellmouth may include a downstream half of the bellmouth, and the nozzles may be connected to a plurality of struts (34), each of the struts comprising a structural member that connects an inner diameter casing (28) of the bellmouth to an outer diameter casing (32) of the bellmouth. In some embodiments, the nozzles (40) may be positioned on a leading edge (36) of at least one of the struts and a minimum clearance of at least approximately 0.2 m may be maintained between the nozzles and the inner diameter casing (28) of the bellmouth. In other embodiments, the nozzles may be positioned on a trailing edge (38) of at least one of the struts (34) and a minimum clearance of at least approximately 0.05 m may be maintained between the nozzles and the inner diameter casing of the bellmouth.

## Description

### TECHNICAL FIELD

This present application relates generally to systems for achieving power augmentation in turbine engines using wet compression. More specifically, but not by way of limitation, the present application relates to systems for achieving power augmentation through wet compression while avoiding erosion to the roots of first stage rotor blades.

### BACKGROUND OF THE INVENTION

It is well known that the addition of water, or other suitable liquids or mixtures of liquids, into the working fluid of gas turbines may be used for increasing the power that can be generated by gas turbine units. The increase of available power is due to, among other reasons, the cooling effect of the added water reducing the compressor power consumption and allowing an increased firing of the gas turbine unit, as well as due to the increased mass flow passing the turbine blades.

Water may be added either in the form of vapor, that is in the form of humidified air or, and this relates to the present invention, in the form of small liquid droplets, i.e. water can be added above the saturation level of water in the air. This technique is usually carried out by adding liquid droplets, which typically are water droplets, of particular size to the air stream entering the compressor of the gas turbine unit (so-called "wet compression"). Wet compression allows the turbine to increase the power available due to the reduction of work required for compression of the inlet air, as the latent heat for evaporation of this water cools the inlet air stream when it passes the compressor stages.

There are a number of known systems for using "wet compression" to augment the power of a turbine. These existing wet compression systems, however, do not address the travel path of the water droplets. As such, these systems contribute to measurable levels of first stage rotor blade root erosion, which, as described below, is a significant industry issue.

The known systems, typically, use water nozzles positioned a significant distance from the compressor inlet, such as, for example, in the inlet plenum or inlet of the bellmouth, to inject a spray of water into the working fluid. Injected in this location, the spray of water travels through the curvature of the bellmouth, which causes the water droplets to drift toward the inner diameter of the bellmouth casing. As such, many of the water droplets may approach the compressor inlet in close proximity to the inner diameter of the bellmouth casing, which substantially positions these water droplets in radial alignment with the roots of the rotor blades. The flow into the compressor inlet, which is substantially laminar, then carries these water droplets into the roots of the rotor blades.

Because of the high velocity of the flow through this region, which may cause the water droplets to travel in the range of 100 to 170 m/s, water droplets that strike the root of the rotor blades may cause erosion thereto and eventually the development of erosion pits. As used herein, the root of the rotor blade is defined as generally as the lower part or base of the rotor blade that connects the airfoil section of the rotor blade to the rotor. As one of ordinary skill in the art will appreciate, because of the weight of the airfoils and the high rotational velocity of the compressor, the roots of the rotor blades undergo a greater amount of stressing during operation than other areas of the rotor blade. As such, erosion to the roots is particularly troublesome. For example, if the erosion pits caused by the water droplets exceed a critical flaw size, a total failure of the turbine blade may occur, causing the airfoil to separate from the root. Such an occurrence would cause substantial damage to the turbine unit.

Thus, erosion to the roots of the rotor blades is due, at least in part, to the common practice of locating spray nozzles a significant distance upstream of the compressor inlet. This practice results in the inability to target the water spray away from the roots of the rotor blades. Further, such upstream located spray nozzles can produce significant wetting of the bellmouth casing walls, particularly at the inner diameter. Wetting in this location may lead to the formation of larger water droplets that generally are in position to strike the roots of the rotor blades when they break free of the bellmouth casing walls and enter the compressor. Such upstream located spray nozzles also may produce significant wetting and cooling of the outer compressor casing that may reduce clearances to unwanted levels. Nozzles located within the ducting also may produce poor water entrainment and result in the collection of water on the floor of the inlet plenum, which may require drains to remove.

Thus, there is a need for improved systems for achieving power augmentation through wet compression while avoiding erosion to the roots of first stage rotor blades and the other issues described above.

### BRIEF DESCRIPTION OF THE INVENTION

The present application thus may describe a wet compression system for a gas turbine compressor having a bellmouth that includes a plurality of nozzles for spraying a fine spray of liquid disposed within an aft section of the bellmouth. In some embodiments, the wet compression system further may include a plurality of support members that each span across the bellmouth from an inner diameter casing to an outer diameter casing, the support members supporting the nozzles within the aft section of the bellmouth. The support members may be disposed at regular intervals around the circumference the bellmouth and aligned such that they are substantially perpendicular to the flow of a working fluid through the aft section of the bellmouth.

In some embodiments, the axial position of the support members may be an approximate position of a leading edge of a strut. In other embodiments, the axial position of the support members may be an approximate position of a trailing edge of a strut. The aft section of the bellmouth may be a downstream half of the bellmouth. In other embodiments, the aft section of the bellmouth may be a section of the bellmouth that is downstream of an approximate position of a leading edge of a strut.

In some embodiments, the bellmouth may include a plurality of struts. The struts may be structural members that are disposed circumferentially at approximate regular intervals around the bellmouth and connect an inner diameter casing to an outer diameter casing. The nozzles may be positioned on a leading edge of at least one of the struts. In such embodiments, a minimum clearance may be maintained between the nozzles and the inner diameter casing of the bellmouth. The minimum clearance may be at least approximately 0.2 m. The nozzles may be oriented such that at least one nozzle directs a spray of liquid toward one side of the strut and at least one nozzle directs a spray of liquid toward the other side of the strut.

In other embodiments, the nozzles may be positioned on a trailing edge of at least one of the struts. In such embodiments, the nozzles may be oriented such that at least one nozzle directs a spray of liquid toward one side of the strut and at least one nozzle directs a spray of liquid toward the other side of the strut. Further, in such embodiments, a minimum clearance may be maintained between the nozzles and an inner diameter casing of the bellmouth. The minimum clearance may be at least approximately 0.05 m.

The present application further describes a wet compression system for a gas turbine compressor having a bellmouth that includes a plurality of nozzles for spraying a fine spray of liquid disposed within an aft section of the bellmouth. The aft section of the bellmouth may include a downstream half of the bellmouth, and the nozzles may be connected to a plurality of struts, each of the struts comprising a structural member that connects an inner diameter casing of the bellmouth to an outer diameter casing of the bellmouth. In some embodiments, the nozzles may be positioned on a leading edge of at least one of the struts and a minimum clearance of at least approximately 0.2 m may be maintained between the nozzles and the inner diameter casing of the bellmouth. In other embodiments, the nozzles may be positioned on a trailing edge of at least one of the struts and a minimum clearance of at least approximately 0.05 m may be maintained between the nozzles and the inner diameter casing of the bellmouth.

These and other features of the present application will become apparent upon review of the following detailed description of the preferred embodiments when taken in conjunction with the drawings and the appended claims.

### BRIEF DESCRIPTION OF THE DRAWINGS

FIG. 1 is a schematic line drawing illustrating a side view of an exemplary rotor blade.

FIG. 2 is a schematic line drawing illustrating a cross-sectional view of known wet compression systems within an exemplary compressor bellmouth.

FIG. 3 is a schematic line drawing illustrating a cross-sectional view of a wet compression system within a compressor bellmouth in accordance with an exemplary embodiment of the present application.

FIG. 4 is a schematic line drawing illustrating a cross-sectional view of a wet compression system within a compressor bellmouth in accordance with an alternative exemplary embodiment of the present application.

FIG. 5 is a schematic line drawing of the embodiment of Fig. 4 from an upstream perspective.

FIG. 6 is a schematic line drawing illustrating a cross-sectional view of a wet compression system within a compressor bellmouth in accordance with an alternative exemplary embodiment of the present application.

FIG. 7 is a schematic line drawing illustrating a cross-sectional view of a wet compression system within a compressor bellmouth in accordance with an alternative exemplary embodiment of the present application.

### DETAILED DESCRIPTION OF THE INVENTION

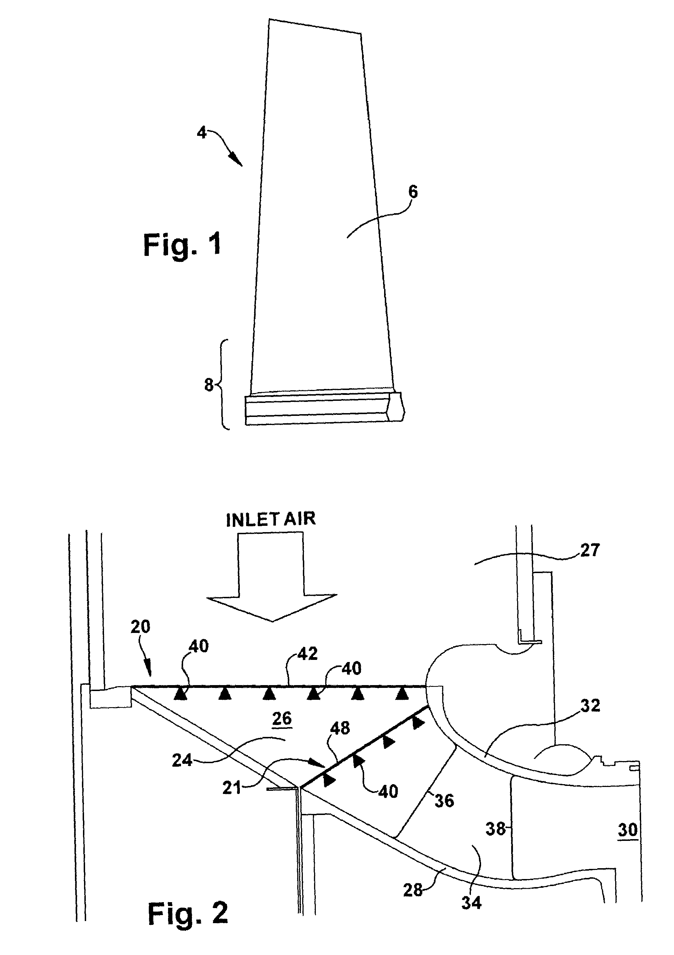

Referring now to the figures, where the various numbers represent like parts throughout the several views, Fig. 1 illustrates a rotor blade 4 that may be used in a compressor of a turbomachine. The rotor blade 4 may include an airfoil 6 that extends from a base region or root 8. In general, the root 8 attaches the rotor blade 4 to a rotor (not shown). In operation, the rotor may rotate the rotor blades 4 at a high velocity to create a supply of pressurized air, which then may be fed to a combustor (not shown) for the combusting of a fuel. The root 8 may undergo substantial stressing due to the high rotational velocities and the weight of the rotor blade 4. As one of ordinary skill in the art will appreciate, the rotor blade 4 is exemplary only as to the type of rotor blades that may be used in a turbine engine in which the present invention may be used.

Fig. 2 illustrates known wet compression systems 20, 21. The known wet compression systems 20, 21 may be used independently or in combination. Wet compression systems 20, 21 may be located within the bellmouth 24. As used herein, bellmouth is meant to refer to the entrance or downstream section of the air inlet passageway for a compressor of a turbine engine. As one of ordinary skill in the art will appreciate, the bellmouth 24 typically may include a narrowing passage that extends circumferentially around an inner cone and provides the passageway through which the working fluid travels to the compressor, as depicted in section view in Fig. 2. The bellmouth 24 may have an inlet 26 that connects to an inlet plenum 27. The inlet plenum 27 generally includes the ducting upstream of the bellmouth 24.

From the inlet 26, as illustrated, the bellmouth 24 may narrow and curve downward. An inner diameter casing 28 may define the inner diameter of the bellmouth 24. In general, the inner diameter casing 28 is configured such that it creates an inner cone shape that narrows toward a compressor inlet 30. Thus, the inner diameter casing 28 of the bellmouth 24 may slope inward radially as it nears the compressor inlet 30 (which, given the perspective of Fig. 2, provides for a downward or negative slope from the inlet 26 to the compressor inlet 30). An outer diameter casing 32 may define the outer diameter of the bellmouth 24. As illustrated, the outer diameter casing 32 may curve inwardly from the inlet 26 to the compressor inlet 30. Thus, generally, the bellmouth 24 transitions from a substantially vertical passageway at the inlet 26 to a substantially horizontal passageway at the compressor inlet 30.

The bellmouth 24 further may include a plurality of struts 34. The struts 34 may include a plurality of structural members that are disposed circumferentially at regular intervals around the bellmouth 24. In some gas turbines, there are approximately 7 - 12 struts 34 equally spaced circumferentially around the bellmouth 24. In general, the struts 34 are oriented such that they present a relatively thin profile to the flow of the working fluid and extend in a downstream direction parallel to the flow of working fluid. For example, typically, the strut 34 may be approximately 0.10 to 0.20 m thick and 0.4 to 0.6 m long. The height is dictated by the distance from the inner diameter casing 28 to the outer diameter casing 32. As illustrated, a leading edge 36 of the strut 34 may be positioned approximately half way down the bellmouth 24, as the bellmouth 24 tends to be more horizontal in alignment. A trailing edge 38 of the strut 34 may be positioned downstream of the leading edge 36, at approximately where the bellmouth 24 becomes a horizontal passageway, which is just upstream and in relatively close proximity to the compressor inlet 30. In function, the struts 34 connect the inner diameter casing 28 to the outer diameter casing 32. The bellmouth 24 will be used throughout in connection with the description of the known systems and the exemplary embodiments of the present application. Those of ordinary skill in the art will appreciate that the exemplary embodiments of the present application also may be used in other types of inlet or bellmouth designs and that use of the bellmouth 24 is exemplary only. As used herein, the term bellmouth is meant to include these other types of inlet designs.

The wet compression system 20 may include a plurality of nozzles 40 located at the inlet 26 of the bellmouth 24. The nozzles 40 may be arrayed throughout the inlet 26 per conventional apparatus. For example, the spray rack 42 may include a plurality of support members, such as pipes, that each span the axial length of the inlet 26, as illustrated in Fig. 2. The support members of the spray rack 42 may be disposed at regular intervals around the circumference of the inlet 26 of the bellmouth 24. The support members of the spray rack 42 may be aligned such that they are substantially perpendicular to the flow of the working fluid through that area of the bellmouth 24. A plurality of nozzles 40 may be evenly disposed across the axial length of each of the structural members.

The nozzles 40 of wet compression system 20 may include any of a number of commercially available nozzles suitable for such an application. In general, the nozzles 20, which are sometimes referred to as liquid atomization nozzles, are designed to provide a very fine spray of water. For example, the nozzles 40 may provide a spray of water that contains droplet sizes in the range of 10 to 20 microns. The nozzles 40 may be supplied by conventional water supply lines (not shown) that either run through or are supported by the spray rack 42. The water supply lines may provide a supply of pressurized and filtered water to each of the nozzle 40 locations.

In use, the wet compression system 20 may inject a fine spray of water into the working fluid at the inlet 26 of the bellmouth 24 that is drawn into the bellmouth 26 by the negative pressure created by the rotating rotor blades in the compressor (not shown). As stated, much of this water spray evaporates into the working fluid, thereby cooling and increasing the mass of the flow such that the power of the turbine may be enhanced. As one of ordinary skill in the art will appreciate, however, some of the water droplets from the spray of the nozzles 40 may not evaporate, thus remaining within the high-velocity flow of the working fluid, which carries them through the bellmouth 24. The forces acting on the water droplets as they pass through the curvature of the bellmouth 24 generally cause many of the water droplets to drift toward the inner diameter casing 28 of the bellmouth 24. In addition, the non-laminar flow that is typical in the upper section of the bellmouth may cause the droplets to inhabit all layers of the working fluid flow. These conditions generally lead to a significant number of the water droplets flowing through the aft section of the bellmouth 24 in close proximity to the inner diameter casing 28. Once past the curvature of the bellmouth 24, the flow of the working fluid straightens out (i.e., becomes more laminar) such that the water droplets generally maintain their radial position as they move through this region. Thus, a significant number of water droplets may be in a radial position (i.e., in close proximity to the inner diameter casing 28) to strike against the roots 8 of the rotor blades 4 when they enter the compressor inlet 30. As described, water droplets that strike the roots 8 may cause erosion thereto.

The wet compression system 21 may be similar to the wet compression 20 except for the positioning of the nozzles 40. In the wet compression system 21, a spray rack 48 may be located downstream of the inlet 26 and upstream of the leading edge 36 of the strut 34. More precisely, the spray rack 48 of the wet compression system 21 may be located approximately half way between the inlet 26 of the bellmouth 24 and the leading edge 36 of the strut 34, as illustrated.

In use, the wet compression system 21 may function similarly to that described above for wet compression system 20. Because the wet compression system 21 is positioned further aft in the bellmouth 24, less water droplets may be forced against the inner diameter casing 28 than for the wet compression system 20. This is because the nozzles 40 are located further down the bellmouth such that part of the curvature of the bellmouth 24 is removed from the path the water spray has to travel from the nozzle 40 to the compressor inlet 30. Further, being released further downstream in the bellmouth 24, the water droplets are introduced in an area of less turbulent, more laminar flow. Nevertheless, the location of the wet compression system 21 still leads to significant erosion to the roots 8 of the rotor blades 4. This is because a significant amount of bellmouth curvature remains between the nozzles 40 of wet compression system 21 and the compressor inlet 30. Traveling through the curvature, as described, generally causes the water droplets to drift toward the inner diameter casing 28 and come in close proximity to the inner diameter casing 28 just before entering the compressor inlet 30. In addition, the flow through this area of the bellmouth 24, while less turbulent than at the inlet 26, is still turbulent enough to scatter the water droplets to all areas of the flow. The wet compression system 20 and the wet compression system 21 are not part of this invention and were provided so that the embodiments of the present invention, as provided below, may be better appreciated.

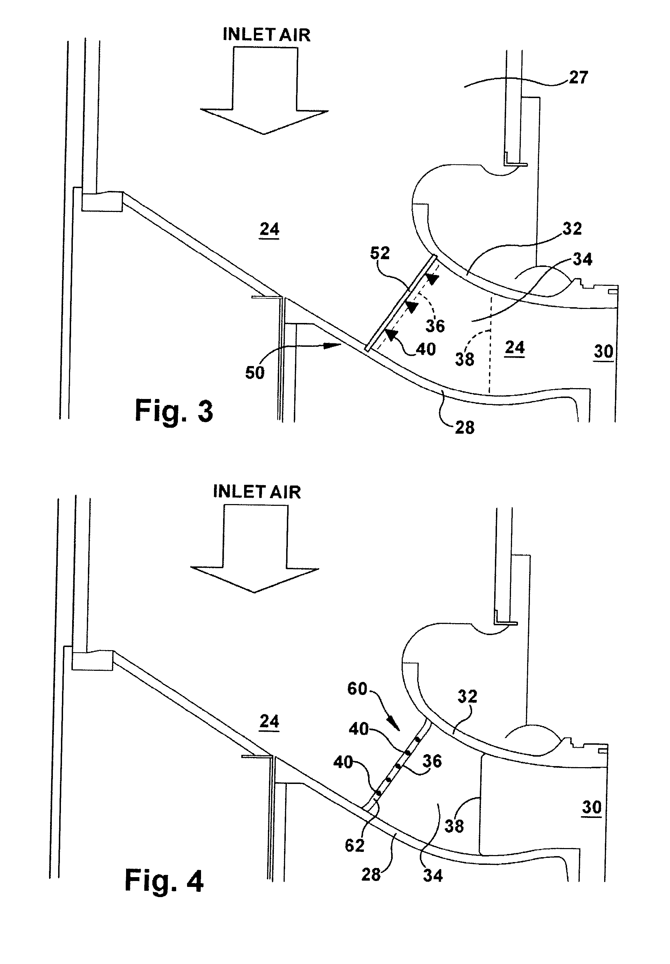

Fig. 3 illustrates a wet compression system 50 according to an exemplary embodiment of the present application. The wet compression system 50 may include a spray rack 52 and nozzles 40 that are similar as those described above for the wet compression systems 20, 21, or may include other conventional apparatus and systems. As illustrated, the spray rack 52 may be positioned within the bellmouth 24 such that its axial position is approximately the same as the leading edge 36 of the strut 34. Similar to that described above in connection to the wet compression systems 20, 21, the spray rack 52 may include a plurality of support members that each span across the bellmouth 24 (i.e., from the outer diameter casing 32 to the inner diameter casing 28), as illustrated in Fig. 3. As one of ordinary skill in the art will appreciate, the spray rack 52 is exemplary only and other types of methods of support for the nozzles 40 may be used. The support members of the spray rack 52 may be disposed at regular intervals around the circumference of the bellmouth 24 between the struts 34. The support members of the spray rack 52 may be aligned such that they are substantially perpendicular to the flow of the working fluid through that area of the bellmouth 24. A plurality of nozzles 40 may be evenly disposed across the each of the structural members.

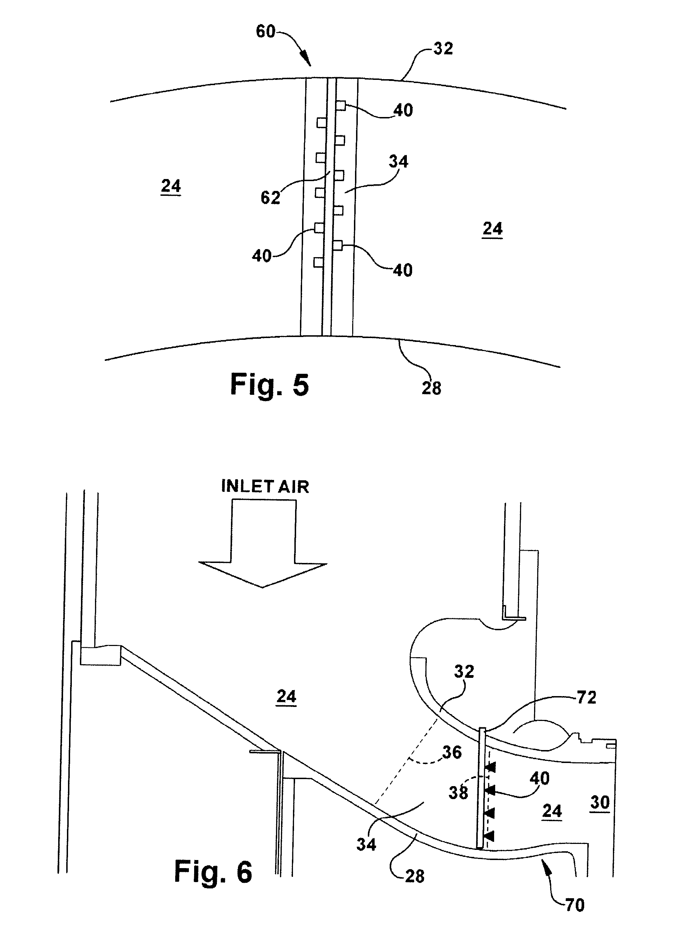

In alternative embodiments, a wet compression system 60 may provide a plurality of nozzles 40 that are attached to the leading edge 36 of the strut 34, as illustrated in Fig. 4. Fig. 5 provides an alternative view of the wet compression system 60 from upstream in the bellmouth 24. As illustrated, a supply line 62 may be positioned along the leading edge 36 of the strut 34 such that it runs from the outer diameter casing 32 to the inner diameter casing 28. The nozzles 40 may be positioned along either side of the supply line 62 such that the nozzles 40 on the leading edge 36 may provide water spray to the flow of working fluid along both sides of the strut 34. A set of nozzles 40 may be attached to the leading edge 36 of each of the struts 34, which, because of the typical number and spacing of the struts 34, would provide approximately 7-12 sets of nozzles evenly spaced around the circumference of the bellmouth 24.

In use, the wet compression system 50 and the wet compression system 60 may operate in similar manner. Each of the systems 50, 60 may provide a spray of water to the flow of working fluid such that the number of water droplet that strike the roots 8 of the rotor blades 4 is significantly reduced. More specifically, by introducing the spray of water in a region of the bellmouth 24 that is substantially beyond the curvature of the bellmouth 24 and within an area of more laminar flow, the spray may be targeted such that it is unlikely to strike the roots 8 of the rotor blades 4. Thus, when introduced in this manner, the water spray is less likely to be pushed toward the inner diameter casing 28, meaning less water droplets will be entering the compressor inlet 30 in close proximity to the inner diameter casing 28. This means that less water droplets will be radially positioned to strike the roots 8 of the rotors 4 as they pass through the compressor, which will reduce root erosion.

In some embodiments of the wet compression systems 50, 60, this may be achieved more effectively by introducing the water spray at a radial position that leaves a minimum clearance between the location of the nozzle 40 and the inner diameter casing 28. This minimum clearance (i.e., the distance between the most inwardly radial nozzle 40 and the inner diameter casing 28), in some embodiments, may be about 0.2 to 0.3 m. Being introduced in this manner, any water droplets that do not evaporate into the flow of working fluid generally will flow through the bellmouth 24 and, given the more laminar flow in this region, generally will maintain their radial position relative to the inner diameter casing 28. Accordingly, when the water droplets enter the compressor inlet 30, it will be less likely that the water droplets will be in a radial position to strike the roots 8 of the rotor blades 4.

Further, positioning of the nozzles as described for the wet compression system 50 and wet compression system 60 generally insures that substantially all of the water spray is ingested by the compressor. Typically, nozzles 40 that are located a significant distance from the compressor inlet 30, for example in the bellmouth inlet 26 or inlet plenum 27, produce undesirable wetting to the bellmouth casing 28, 32 and/or the casing of the inlet plenum 27, which often requires a drain to remove. A high-level of water spray ingestion is beneficial because the amount of augmentation to the output of the turbine is directly related to the amount of water spray that passes through the turbine (i.e., more ingestion equals more turbine output augmentation).

Fig. 6 illustrates a wet compression system 70 according to an exemplary embodiment of the present application. The wet compression system 70 may include a spray rack 72 and nozzles 40 that are similar as those described above for the wet compression systems 20, 21, or may include other conventional apparatus and system. As illustrated, the spray rack 72 may be positioned within the bellmouth 24 such that its axial position is approximately the same as the trailing edge 38 of the strut 34. Similar to that described above, the spray rack 72 may include a plurality of support members that each span across the bellmouth 24 (i.e., from the outer diameter casing 32 to the inner diameter casing 28), as illustrated in Fig. 6. As one of ordinary skill in the art will appreciate, the spray rack 72 is exemplary only and other types of methods of support for the nozzles 40 may be used. The support members of the spray rack 72 may be disposed of evenly around the circumference of the bellmouth 24 between the struts 34. The support members of the spray rack 72 may be aligned such that they are substantially perpendicular to the flow of the working fluid through that area of the bellmouth 24. A plurality of nozzles 40 may be evenly disposed across the each of the structural members.

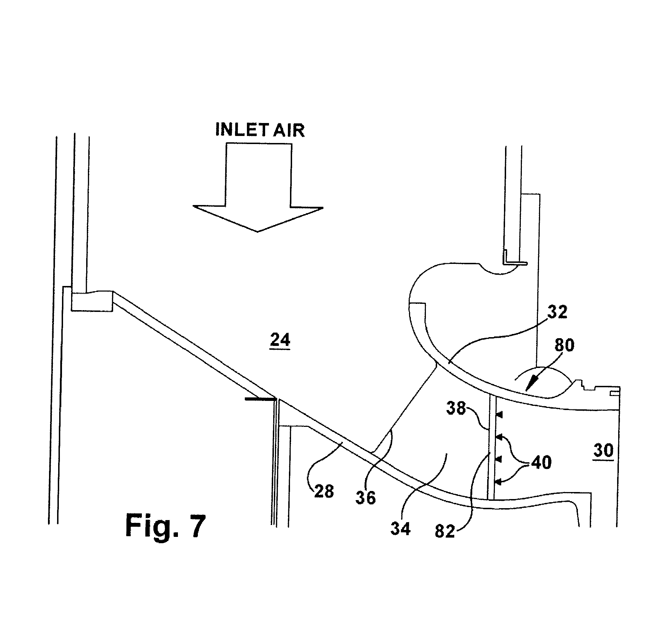

In alternative embodiments, a wet compression system 80 may provide a plurality of nozzles 40 that attach directly to the trailing edge 38 of the strut 34, as illustrated in Fig. 7. A supply line 82 may be positioned along the trailing edge 38 of the strut 34 such that it runs from the outer diameter casing 32 to the inner diameter casing 28. The nozzles 40 may be positioned along the supply line 82 such that the nozzles 40 direct water spray downstream into the working fluid, as illustrated. In alternative embodiments (not shown), the nozzles 40 may be positioned along the supply line 82 such that the nozzles 40 direct water spray to either side of the strut 34, similar to the nozzle orientation described for the wet compression system 60. A set of nozzles 40 may be attached to the trailing edge 38 of each of the struts 34, which, because of the typical number and spacing of the struts 34, would provide approximately 8-10 sets of nozzles evenly spaced around the circumference of the bellmouth 24.

In use, the wet compression system 70 and the wet compression system 80 may operate in similar manner to that described for the wet compression system 50 and the wet compression system 60. Each of the systems 70, 80 may provide a spray of water to the flow of working fluid such that the number of water droplet that strike the roots 8 of the rotor blades 4 is significantly reduced. More specifically, by introducing the spray of water in a region of the bellmouth 24 the is substantially beyond the curvature of the bellmouth 24 and within an area of more laminar flow, the spray may be targeted such that it is unlikely to strike the roots 8 of the rotor blades 4. Thus, when introduced in this manner, the water spray is less likely to be pushed toward the inner diameter casing 28, meaning less water droplets will be entering the compressor inlet 30 in close proximity to the inner diameter casing 28. As described, this means that less water droplets will be radially positioned to strike the roots 8 of the rotors 4 as they pass through the compressor, which will reduce root erosion.

Because of their positioning further downstream, in some applications, the wet compression system 70 and the wet compression system 80 may be more effective at targeting the water spray to avoid erosion to the roots than the wet compression system 50 and the wet compression system 60. More specifically, at the trailing edge 38 of the strut 32, the bellmouth 24 has substantially become a horizontal passageway and the flow of the working fluid through this region is essentially a laminar one. Because of this, the water droplets introduced into the flow generally will maintain their radial position (i.e., their distance from the inner diameter casing 28) as they flow through the remainder of the bellmouth 24 and into the compressor inlet 30. More specifically, the water droplets are not pushed toward the inner diameter casing 28 and, thus, are less likely to be in a position to strike the roots 8 of the rotor 4 upon entering the compressor.

In some embodiments of the wet compression systems 70, 80, the targeting of the water spray may be achieved more effectively by introducing the water spray at a radial position that leaves a minimum clearance between the location of the nozzle 40 and the inner diameter casing 28. This minimum clearance (i.e., the distance between the most inwardly radial nozzle 40 and the inner diameter casing 28), in some embodiments, may be about 0.05 to 0.1 m. Being introduced in this manner, any water droplets that do not evaporate into the flow of working fluid generally will flow through the bellmouth 24 and, given the more laminar flow in this region, maintain their radial position relative to the inner diameter casing 28. Accordingly, when the water droplets enter the compressor inlet 30, it will be less likely that the water droplets will be in a radial position to strike the roots 8 of the rotor blades 4.

Further, the downstream positioning of the nozzles 40 in the wet compression systems 70, 80 insures that substantially all of the water spray is ingested by the compressor. As described above, a high-level of water spray ingestion is beneficial to turbine performance.

It should be noted that the various embodiments of the present invention, i.e., the wet compression system 50, the wet compression system 60, the wet compression system 70, and the wet compression system 80, may be used either separately or together, depending on the application and the desired amount of wet compression augmentation. Further, the location of the nozzles 40 in the wet compression system 50 and the wet compression system 70 is not limited, respectively, the leading edge 36 and trailing edge 38 of the strut 34. These locations were meant as exemplary locations within the aft section of the bellmouth 24. As used herein, the aft section of the bellmouth 24 is meant to refer to the section of the bellmouth 24 that is in proximity to the compressor inlet 30, which may be approximately the downstream half of the bellmough 24. As shown in Figs. 2-7, the aft section of the bellmouth 24 may be defined as that section of the bellmouth 24 that is downstream of the approximate axial position of the leading edge 36 of the strut 34. [143] From the above description of preferred embodiments of the invention, those skilled in the art will perceive improvements, changes and modifications. Such improvements, changes and modifications within the skill of the art are intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

## Claims

1. A wet compression system for a gas turbine compressor having a bellmouth, comprising a plurality of nozzles for spraying a fine spray of liquid disposed within an aft section of the bellmouth.

2. The wet compression system of claim 1, further comprising a plurality of support members that each span across the bellmouth from an inner diameter casing to an outer diameter casing, the support members supporting the nozzles within the aft section of the bellmouth.

3. The wet compression system of claim 2, wherein the support members are disposed at regular intervals around the circumference the bellmouth and aligned such that they are substantially perpendicular to the flow of a working fluid through the aft section of the bellmouth.

4. The wet compression system of claim 2, wherein the axial position of the support members comprises an approximate position of a leading edge of a strut.

5. The wet compression system of claim 2, wherein the axial position of the support members comprises an approximate position of a trailing edge of a strut.

6. The wet compression system of any one of the preceding claims, wherein the aft section of the bellmouth comprises a downstream half of the bellmouth.

7. The wet compression system of any one of the preceding claims, wherein the aft section of the bellmouth comprises a section of the bellmouth that is downstream of an approximate position of a leading edge of a strut.

8. The system of any one of the preceding claims, wherein the bellmouth includes a plurality of struts, the struts comprising structural members that are disposed circumferentially at approximate regular intervals around the bellmouth and connect an inner diameter casing to an outer diameter casing.

9. The system of claim 8, wherein the nozzles are positioned on a leading edge of at least one of the struts.

10. The system of claim 9, wherein a minimum clearance is maintained between the nozzles and the inner diameter casing of the bellmouth.

11. The system of claim 10, wherein the minimum clearance comprises at least approximately 0.2 m.

12. The system of claim 9, wherein the nozzles are oriented such that at least one nozzle directs a spray of liquid toward one side of the strut and at least one nozzle directs a spray of liquid toward the other side of the strut.

13. The system of claim 8, wherein the nozzles are positioned on a trailing edge of at least one of the struts.

14. The system of claim 13, wherein the nozzles are oriented such that at least one nozzle directs a spray of liquid toward one side of the strut and at least one nozzle directs a spray of liquid toward the other side of the strut.

15. The system of claim 13, wherein a minimum clearance is maintained between the nozzles and an inner diameter casing of the bellmouth.

16. The system of claim 15, wherein the minimum clearance comprises at least approximately 0.05 m.

17. The system of any one of the preceding claims, wherein a minimum clearance is maintained between the nozzles and an inner diameter casing of the bellmouth, said minimum clearance comprising at least approximately 0.05 m.

18. A wet compression system for a gas turbine compressor having a bellmouth, comprising a plurality of nozzles for spraying a fine spray of liquid disposed within an aft section of the bellmouth;
wherein the aft section of the bellmouth comprises a downstream half of the bellmouth, and the nozzles are connected to a plurality of struts, each of the struts comprising a structural member that connects an inner diameter casing of the bellmouth to an outer diameter casing of the bellmouth.

19. The system of claim 18, wherein the nozzles are positioned on a leading edge of at least one of the struts and a minimum clearance of at least approximately 0.2 m is maintained between the nozzles and the inner diameter casing of the bellmouth.

20. The system of claim 18, wherein the nozzles are positioned on a trailing edge of at least one of the struts and a minimum clearance of at least approximately 0.05 m is maintained between the nozzles and the inner diameter casing of the bellmouth.
